# EUROPEAN PATENT SPECIFICATION

(11) **EP 3 366 177 B1**
(45) Date of publication and mention of the grant of the patent: **21.08.2024**
(21) Application number: 18157713.1
(22) Date of filing: 20.02.2018
(51) Int. Cl.: A47J 45/02, A47J 47/16, A47K 10/12

(54) **DEVICE FOR SUPPORTING KITCHEN OBJECTS**
VORRICHTUNG ZUM TRAGEN VON KÜCHENGEGENSTÄNDEN
DISPOSITIF POUR SUPPORTER DES OBJETS DE CUISINE

(30) Priority: 23.02.2017 IT 201700020736
(43) Date of publication of application: 29.08.2018
(73) Proprietor: Bellanda S.R.L., 15121 Alessandria AL (IT); Ste financiere Veron _Sofive, 83700 Saint-Raphaël (FR)
(72) Inventor: BELLANDA, Paolo, 15121 Alessandria AL (IT)
(74) Representative: Sach, Greg Robert

(56) References cited:
- WO-A1-2007/144450
- WO-A1-96/13191
- DE-U1- 202004 006 864
- DE-U1- 202011 107 335
- FR-A1- 2 887 416
- JP-A- 2014 200 513
- US-A- 5 895 018
- US-A1- 2005 248 075
- US-A1- 2012 056 441

## Description

The present invention refers to the field of kitchen accessories. In particular, the present invention deals with those kitchen accessories suitable for supporting other kitchen objects, in order to make them more immediately accessible and more conveniently usable.

A plurality of devices are known in the art to enable the most used objects in the kitchen to be kept at hand and in plain sight, moreover without creating disorder.

Some classic examples are hooks suitable to be fixed to walls or to furniture by means of screws, glue, adhesives, or also by means of suction cups, suitable to be fixed on plastic or tiled surfaces. The objects that are usually desirable to have at hand can be kitchen objects and various accessories, but in particular those that are mostly used in the kitchen at all times are sponges and dishcloths; to keep these devices at hand to make them easy to use or to put them away, certainly to hang or place in view them is one of the most practical solutions, because sponges and dishcloths are often damp by use, so leaving them in sight makes it easier to dry them in ambient air.

The advantage of hooks, wall-mounted containers, and so on is obvious, one of the equally obvious disadvantages is the fact that fixing a hook to a wall involves drilling it, or gluing onto tiles/walls/surfaces, operations which can damage the surfaces themselves; moreover once fixed, the positioning of the object always in the same place becomes mandatory.

Conversely suction cup hooks do not damage the surfaces, but are not suitable to be attached on every surface and often tend to detach due to moisture, thus providing poor reliability. In addition, hooks generally necessitate the use of objects with special slots suitable to be attached thereon.

Moreover, hooks, storage boxes or sponge holders etc., may not be visually pleasing or may not be appreciated by users.

In particular, there is a substantial difference between means of supporting objects such as sponges and similar objects, which are in particular used in the sink and constantly wet or humid, and dishcloths, ladles or similar.

In this regard, patent documents are known in the art which describe means dedicated to cleaning sponges, such as for example WO2007/144450, which basically describes magnetic devices fixing sponges or similar objects to the kitchen sink; this device includes at least two magnets, one of which is located inside the sink tub and one outside the sink tub against the external structure of the sink. The outer magnet can be attached in a variety of ways and is designed to support the sponge or a similar object inside the sink.

Also, similarly, document US911585484B2 which describes a magnetic accessory suitable to be attached to a ferromagnetic or non ferromagnetic kitchen sink. If the sink is not ferromagnetic, it would appear that a magnetic accessory fixed to the outside of the sink may be present. This device is suitable for attaching objects such as sponge holders etc. on the inside of the sink and is equipped with a magnetic decomposable device suitable to be fixed on means such as a soap holder, a cup, a small shelf etc.. Likewise, there are a number of documents describing more or less creative means to fix, in the sink itself, sponges or means suitable for use in the sink.

These devices in particular are not of interest for the purpose of this invention, which includes among its purposes the description of a device suitable for supporting kitchen accessories such as dishcloths or kitchen accessories, which are not suitable to be housed inside the sink, so that the solutions adopted for this purpose must necessarily be different, in fact the dishcloths or kitchen accessories usually have to be housed in such a way that they are not wet if not when desired and often have dimensions that make them unsuitable for being housed in cramped spaces such as a kitchen sink.

Furthermore, the materials used in such patent applications substantially exploit the ferromagnetic characteristics of the sink, a fundamental feature of these documents but that is not relevant for the purpose of the present invention.

The patent application WO2008058546A1 describes a device which includes means suitable for attaching a dishcloth to various pieces of furniture: such device is composed of at least two magnets to be placed on the inside of a piece of furniture and by two additional magnets to be placed on the outside of that piece of furniture in correspondence with said first at least two magnets; moreover, an additional magnetic element of longitudinal shape is included, the two ends of which are suitable for attaching themselves to the magnets inside the piece of furniture. The device includes a foldable or not foldable rod to support a dishcloth.

This device falls more within the scope of the known art of interest for the present invention but, as it is evident, disadvantageously, it includes a plurality of pieces that make it complex to assemble and use. Moreover it makes also necessary to have sufficient space to be able to fix the magnets in the furniture piece at the correct distance so that additional magnets can be applied on the outside and the metallic fixing bar for the dishcloths.

Moreover, said device can be inconvenient for the user because it is cumbersome and can prevent for example the correct opening of a door, and again, if it is positioned for example in the lower part of the kitchen furniture, the user could frequently bump into the rod protruding from the door, causing obvious discomfort to those in the kitchen, or the rod itself could detach from the support and fall to the ground with obvious inconvenience.

Also, from the point of view of practicality, it is not a convenient or versatile object to adapt to spaces and environments and it is not clear whether it is easily removable or not from a surface.

Moreover, this device immediately appears to an expert in the field to be quite expensive to produce, given the multiplicity of different elements that compose it.

WO 96/13191 describes a support strip provided with an elongated metal strip inside the support strip. Holes are provided in the support strip to hold corresponding magnets that attach themselves to the elongated metal strip. Kitchen cloth apparel, such as pot holders, are especially made by two pieces of cloth sewn together inside which a ferromagnetic chain is provided, in order to allow magnetic attachment of the pot holder to the magnets of the support strip.

US 5,895,018 describes a support system for magnetically supporting a thin, pliable section of material such as a kitchen towel from a surface. The support system includes a first plate with an upper surface and a lower surface and a second plate with an upper surface and a lower surface. Inside each of the two portions of the device, two magnets are provided. The kitchen towel is supported between the two magnets and the device has to be attached magnetically to a magnetic or ferromagnetic surface.

DE202004006864 is prior art, that is not relevant for novelty (Art. 54 (3) EPC).

A purpose of the present invention is therefore to describe a device suitable to support kitchen objects that is versatile in its use and in its positioning.

A further aim of the present invention is to describe a device suitable for supporting kitchen objects that is economical to produce and therefore easy to sell.

A further aim of this invention is to describe a device suitable for supporting kitchen objects that is simple to use.

Another further aim of this invention is to describe a device suitable for supporting kitchen objects that is unobtrusive and not bulky.

It is a further aim of the present invention to describe a device suitable for supporting kitchen objects that is versatile and adaptable to multiple objects.

A further aim of this invention is to describe a device suitable for supporting kitchen objects that improves access to such objects.

It is also a further purpose of this invention to describe a device suitable for supporting kitchen objects that is suitable to be housed anywhere in the kitchen without hindering the user's movements or preventing access to furniture or hindering the opening or closing thereof.

A further purpose of this invention is to describe a device that can be assembled in a variety of ways.

Finally, it is a purpose of the present invention to describe a device suitable to support kitchen objects that constitute a valid and attractive alternative to common hooks or similar.

The invention is directed to the use of a kit of calibrated magnets as defined by the appended claims.

These and other aims will be realized by virtue of the innovative device suitable for supporting kitchen objects described by the present invention comprising a device suitable for supporting kitchen objects, comprising at least a first supporting magnet suitable for being fixed on at least a surface and a second magnet adapted to be coupled on a first side to said at least one first supporting magnet by means of specially calibrated magnetic force, said at least one first supporting magnet being fixed on a surface and exerting its magnetic force through the thickness of said surface, the magnetic force being suitable to hold said at least one second magnet through the surface, said at least one second magnet comprising means adapted to support kitchen objects, said at least one second magnet being adapted to retain, in cooperation with said supporting magnet, at least one or more kitchen objects.

The device comprises at least a first supporting magnet suitable for being fixed on at least a surface and a second magnet adapted to be coupled on a first side to said at least one first magnet by means of specially calibrated magnetic force, in a particularly advantageous way said at least one first magnet is housed inside of a door of a furniture or the like, visible or not visible from the outside, exerting magnetic force suitable to hold said at least one second magnet through the surface S, said at least one second magnet may comprise means adapted to support kitchen objects, and/or may further be suitable to be coupled on a second side to at least a third magnet, said at least one second magnet being adapted to retain within, between said couple of magnets at least one kitchen object, said at least one or a couple of magnets being bound to said supporting magnet.

Still further advantageously, said at least a second and a third magnet are suitable for accommodating between them at least one or more kitchen object, in such a way as to be fixed by coupling with said at least one first supporting magnet at least one kitchen object to the furniture piece to which said at least one first magnet is fixed and possibly fixing one or more other kitchen means between pairs of magnets or to single magnets, each of these magnets being suitable to be held in place by said first supporting magnet. It should be noted that, in a particularly advantageous way, the at least three magnets, which in the description of the attached figures will be called M1, M2, M3, will be dimensioned in such a way that the force of M1 is properly calibrated in order to be able to support the weight of the kitchen object that will be fixed to M1 being held by M2, and or M2/M3, and in a further advantageous way M1 will be dimensioned in such a way that its force of attraction with respect to M2 and/or M3 will be lower than the force of attraction between M2 and M3; this in order that by pulling the kitchen object, it detaches from M1, carrying with it M2 and M3 always mutually connected.

Further variants will be described in the attached figures.

In a further advantageous way, these magnets are suitable to mutually attach and retain a plurality of kitchen objects, such as for example dishcloths, aprons, pot holders, kitchen gloves or various accessories, provided that they are of suitable dimensions and have characteristics suitable to be supported in this way. There are no restrictions on the type of object to be used with the device object of the present invention, the choice remains totally up to the user and obviously will be limited only by the weight of the object, by the possible encumbrance thereof and as said by having the characteristics that make the object suitable to be bound with at least two magnets (including the supporting magnet) or with several magnets of such kind.

In a further advantageous way, it will obviously be possible to use these devices coupled together, or it will be possible to put a device or a plurality of devices in a chosen place, to attach one or more objects with one or more devices to support objects, particularly kitchen objects, described by the present invention.

Still, in an advantageous way it will be possible in some forms of realization to attach to said at least a first M1 magnet, one, a pair or a plurality of magnets M2... Mn, Mn+1, suitable for supporting one or more objects, such as one or more kitchen cloths, said magnets or pairs of magnets M2... Mn being all bound to said first magnet M1, or attached to one another.

It should be noted that, in a particularly advantageous way, the magnets may be of any size desired, provided that they are suitable for the purpose described by the present invention; moreover, the shape of the magnets may also be of any type, round, square, stylized in the shape of any object, flower, animal, etc..

Moreover, also the magnetic power, or magnetic field strength of the magnets will be calibrated according to the shape of the device chosen, and/or will be calibrated to attach objects with different weight and characteristics and/or shape.

Moreover, in a further advantageous way, this innovative device for supporting kitchen objects can include, connected to these magnets, or realized as magnetic elements M1,.... Mn, means such as hooks, clips, clasps, made as attachments or made of magnetic material themselves, or magnets with rings or other fastening elements, for example for kitchen tools having an eyelet or similar.

It should be noted that, in a particularly advantageous way, it will not be necessary to fix hooks or other objects to mobile walls or tiles, for the benefit of practicality and also of the aesthetics of the environment, also, there will be no bars or similar objects to support such objects, which as mentioned above may be cumbersome and impractical. Preferably, the surface to which the first supporting magnet and the second magnet are fixed is non-magnetic or non-ferromagnetic.

Finally, it will be possible, for example, to attach by means of this innovative device any dishcloth with or without eyelets, in an extremely quick and practical way.

These and other advantages obtained thanks to the innovative device for supporting objects in particular for kitchen objects described by the present invention will be further examined and clarified by the description of the attached figures in which:
in fig. 1a, 1b it is represented a basic form of realization of a part of the device for supporting kitchen objects described by the present invention;
in fig. 2a, 2b it is represented the same form of realization of fig. 1a, 1b in the completeness of the innovative device described here in two operating phases;
in fig. 2c it is represented a different form of realization of the device suitable for supporting kitchen objects described by the present invention:
   in fig. 3a, 3b are represented examples of phases of actual use of the innovative device that is an object of the invention.

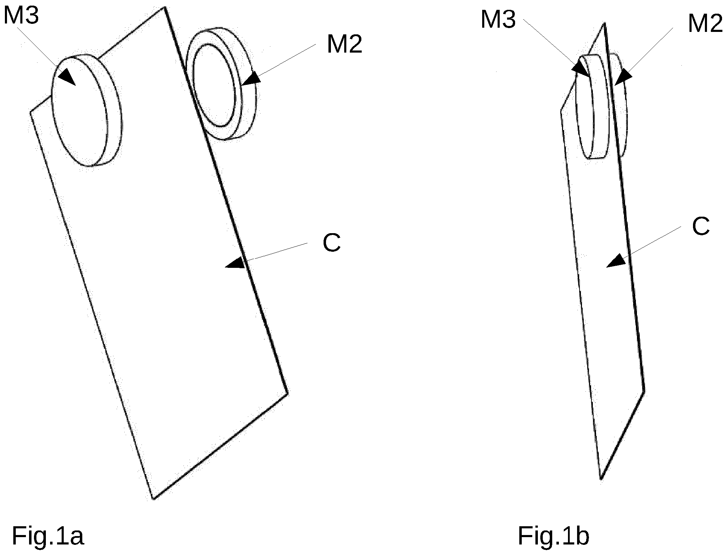

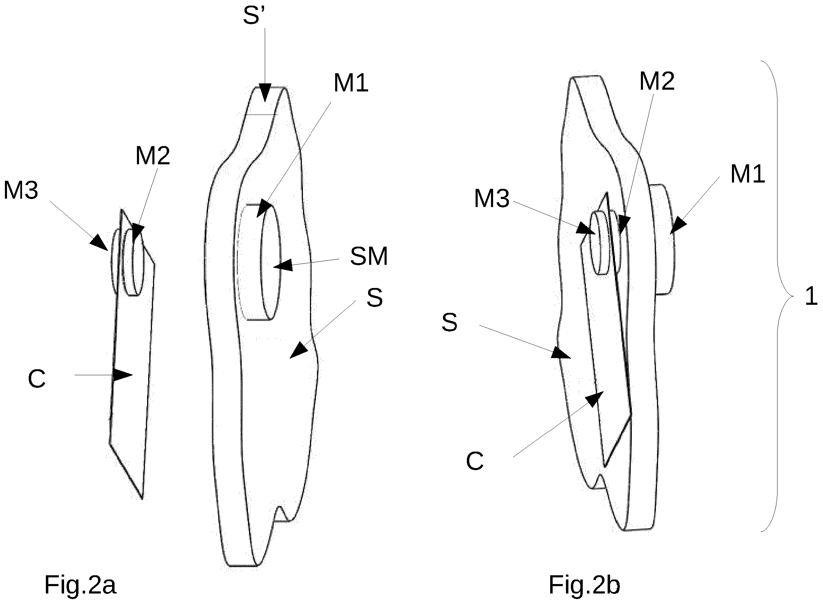

With reference to figures 1a and 1b, it is represented a particularly preferred form of realization of a part of the innovative device 1 for supporting objects in particular kitchen objects described by the present invention. In particular, a pair of magnets M2, M3 is hereby represented, for example having circular flat shape; the two magnets can be made advantageously of any shape or color, or be covered with decorative elements etc.. Said pair of magnets M2, M3 is obviously suitable to reciprocally attract and the attraction force between them will be calibrated in such a way as to be sufficient to hold a kitchen object C, such as a dishcloth, between said two magnets as visible in fig. 2b.

It should be noted that, in a particularly advantageously way, the two magnets M2 and M3 are extremely practical to be applied and to be removed and they remain in their seat during use of the cloth, without in any way hindering or limiting the practicality of use thereof. As anticipated, it will therefore not be necessary to equip oneself with cloths having holes or eyelets; further said magnets in this or in other forms of realization may be used with a plurality of kitchen objects suitable to be hung, this obviously provided that the chosen form of realization is suitable for the object to be supported.

Figs. 2a and 2b show the device 1 for supporting kitchen objects, which can also be considered a kit for supporting kitchen objects, complete in its parts in a particularly preferred basic form of realization.

In particular, in fig. 2a it is visible a supporting magnet M1 fixed, for example, by gluing, or by other suitable method, to a surface S such as a door of a kitchen cabinet. Said supporting magnet M1 in the present form of realization has a circular shape with two flat faces, but it may have any other shape suitable for the purpose. The size, namely the magnetic attraction surface SM of the magnet M1 will be calibrated to support one or more magnets, or one or more pairs of magnets M2, M3 in such a way that by detaching the kitchen object C supported between the pair of magnets M2, M3, the pair of magnets M2, M3 remains connected to each other and is disconnected from the supporting magnet M1. In figures 2a, 2b it is represented the position of the object C connected to said pair of magnets M2, M3 but released from M1 and the rest position in which the object is supported, for example hanging from a door of a furniture piece to which the supporting magnet M1 is firmly attached.

It is to be noted that the magnet M1 exerts its magnetic attraction force through the thickness S' of the surface S, therefore the magnetic force will be calibrated also to have the correct effect (as specified above) also in this sense.

In a particularly advantageous way, the supporting magnet M1, by virtue of special fixing means, is suitable to be fixed on any surface and in a further advantageous way it does not alter the aesthetics, for example of the furniture piece on which it is applied as it remains completely concealed, for example inside the door of said furniture piece.

The one or more supporting magnets M1 (..... M1n) can be attached directly, for example, to a door or surface suitable for this purpose or can be housed within suitable supports adapted, for example to be screwed or glued to a suitable surface.

It is to be noted that when approaching the kitchen object attached or bound to two magnets - or in a different form of realization to a single magnet - to the piece of furniture area where at least one supporting magnet M1 is fixed, the object will be attracted by the magnetic force exerted by the magnet M1 on at least one magnet M2 in place, without the need for external recognition marks on the piece of furniture; this is particularly advantageous for the aesthetics of the furniture that remains unaltered and also practically advantageously, because uncomfortable hooks, rods or further elements that may interfere with a user o limit the opening for example of a door are not present In any case, at the user's choice, it will be possible to place a sticker or similar element near the magnetic attraction zone of the supporting magnet M1 in order to facilitate the identification of the fixing zone.

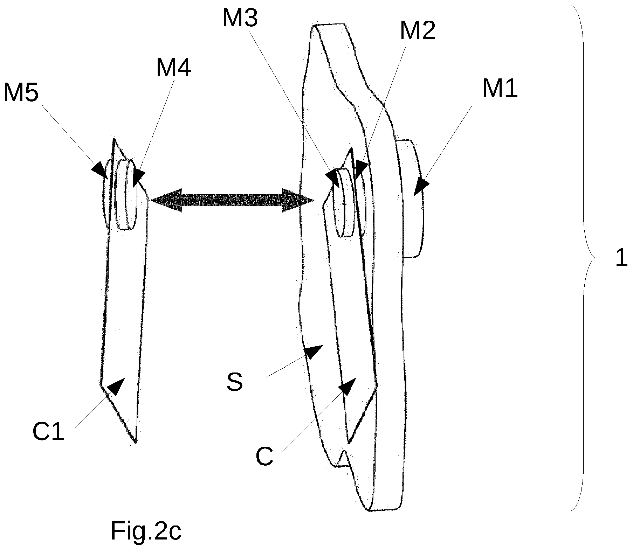

In fig. 2a and 2b are represented as mentioned above two operational positions of use of said device or kit of support for kitchen objects, in figure 2c is also represented an example of one of the many possible forms of realization of the present invention, noting that the addition of elements such as magnets to the same device substantially in unlimited ways that makes it versatile and assemblable at the user's will, makes the definition of "kit" to support, hold or sustain kitchen objects particularly effective for the aims of defining the object of the present invention.

In particular, in fig. 2c it is represented a supporting magnet M1, and two additional secondary magnets M2, M3 connected to each other supporting a kitchen means C such as a dishcloth or pot holder or similar. In this form of realization at least one further pair of magnets M4, M5 will be connected to the magnet M3, which in turn will be suitable to support one another a kitchen means C' equal or different to said first means C.

It is to be noted that any number of objects can be connected in the same way defined for example as "castled" or stacked, obviously within the limit of the weight of the objects to be supported and of the magnetic attraction capacity exerted by M1 and by further Mn magnets capable of exerting in turn a magnetic force in the form of magnetic chain. In this way a magnet (Mn+1) will be held in place both by the magnetic attraction force of Ml and by the force exerted by the magnetic chain M2.... Mn, that is by the magnets connected between Mn+1 and M1.

This can be advantageously sized depending on the chosen design.

In a further advantageous way, similarly further pairs of magnets Mn, Mn+1, etc. can be fixed and maintained connected to a surface S on which, or behind which, at least one supporting magnet M1 is positioned, one next to the other, depending on the magnetic attraction force exerted by M1 or in relation to the structure of the magnetic field; this allows a possible adhesion of magnets or pairs of magnets even beyond the physical boundaries corresponding to the surface of the magnet SM which is in contact with the surface S of the piece of furniture or similar element.

It should be noted that, whenever pairs of magnets M2, M3 and/or M4, M5, and/or Mn, Mn+1 are mentioned, said "pairs of magnets" can always be replaced with single magnets comprising means suitable for supporting kitchen objects, such as clips, clasps, hooks, eyelets, rings or other objects suitable for this purpose; or moreover a magnet of the pair may include suitable means to support an additional kitchen object, in this variant a kitchen object will be supported for example by two magnets Mn1, Mn2 and at least one, or each of these magnets may include one or more means, such as hooks, pliers, carabiners, eyelets, etc.. suitable to support an additional kitchen object.

It should be noted that in a particularly advantageous way this device is composable in infinite ways and providing versatility and originality to this innovative device to support objects for kitchen or "kit".

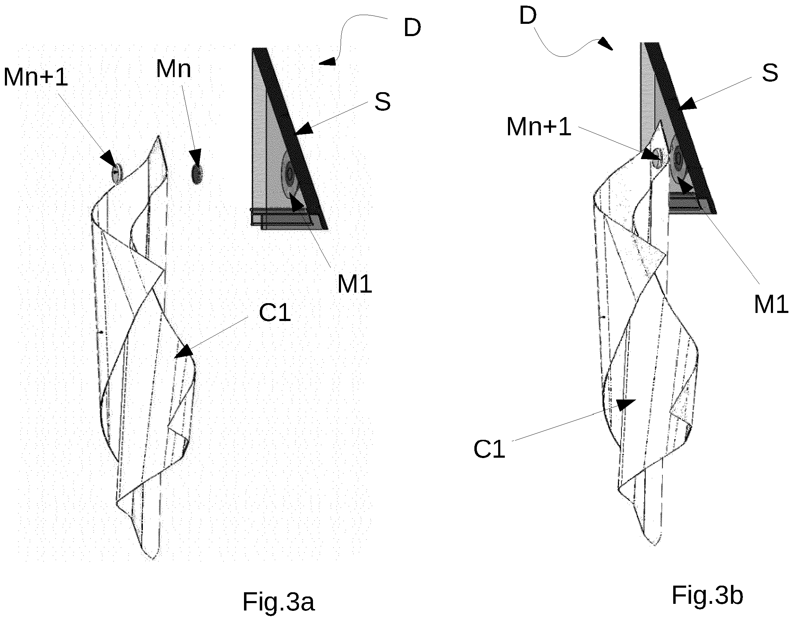

Figure 3a and 3b show two operational views of the use of a basic design form of the kit for supporting kitchen objects or a device to support kitchen objects object of the present invention, applied for example to a dishcloth; note that one or more supporting magnets Ml can also be placed in cavities of kitchen furniture, wall units, drawers, coffers, etc..

The object of the present invention is therefore suitable to fulfill all the purposes described above, providing considerable advantages in terms of practicality and versatility in the field, including as fundamental: insufficient or minimal overall dimensions, concealed positioning in furniture, wall units or similar, no impact on the aesthetics of the furniture or of the environment itself, versatility in the composition of the various parts of the kit or device, as well as use for various objects among which we cite only by way of example aprons, flaps, pot holders, dishcloths, ladles or similar objects etc..

Finally, it should be noted that this device has been defined advantageously as particularly suitable for supporting kitchen objects, but it could be suitable for other types of objects and basically for every room in a house or similar environment (school, hotel, restaurant, bar, etc.).

## Claims

1. Use of a kit of magnets suitable for supporting kitchen objects on a surface (S), the kit of magnets comprising a first supporting magnet (Ml) suitable for being fixed on the surface (S) and at least a pair of magnets comprising a second magnet (M2) and third magnet (M3) wherein, in use:
- a kitchen object is supported between the pair of magnets comprising the second magnet (M2) and the third magnet (M3);
- the pair of magnets comprising the second magnet (M2) and the third magnet (M3) and the kitchen object is supported by the magnetic attraction force of the first supporting magnet (Ml) acting through said surface (S); and
- when the pair of magnets comprising the second magnet (M2) and the third magnet (M3) and the kitchen object is detached from said surface (S), the pair of magnets (M2, M3) comprising the second magnet (M2) and the third magnet (M3) remain connected to each other,
**characterized in that**
the size of the magnetic attraction surface (SM) of the first supporting magnet (M1) is calibrated to support one or more magnets, or one or more pairs of magnets (M2,M3) in such a way that by detaching the kitchen object (C) supported between the pair of magnets (M2,M3), the pair of magnets (M2, M3) remains connected to each other and is disconnected from the supporting magnet (M1).

2. Use of a kit of magnets suitable for supporting kitchen objects according to claim 1, wherein said at least one second magnet (M2) and further magnets (Mn, Mn +1) hold at least one or more kitchen objects (C) by means of hooks, clips or means suitable for the purpose constrained to said magnet (M2, M3 ... Mn, Mn + 1).

3. Use of a kit of magnets suitable for supporting kitchen objects according to claim 1, wherein to said at least one first supporting magnet (Ml) are bound directly by magnetic attraction further magnets (M2, M3, Mn, Mn + 1).

4. Use of a kit of magnets suitable for supporting kitchen objects according to claim 1, wherein to said at least one second magnet (M2) is fixed at least one further magnet (M3) and to said magnet (M3) further magnets (M4, M5 .... Mn, Mn + 1) forming a stacked magnets connection, each of said magnets is held in place both by at least said supporting magnet (Ml) that the magnetic chain formed by the magnets (M2 ... Mn) connected between (Mn + 1) and (Ml).

5. Use of a kit of magnets suitable for supporting kitchen objects according to claim 1, wherein the at least one supporting magnet (Ml) is fixed to the surface (S) by gluing.

6. Use of a kit of magnets suitable for supporting kitchen objects according to claim 1, wherein each of said magnets has a form chosen from round, square, stylized in the shape of any object, flower, or animal.

7. Use of a kit of magnets suitable for supporting kitchen objects according to claim 2, wherein said second magnet (M2) and said further magnets (Mn, Mn +1) are all bound by magnetic attraction to said first supporting magnet (Ml).

## Patentansprüche

1. Verwendung eines Sets von Magneten zum Halten von Küchengegenständen gemäß auf einer Oberfläche (S), wobei der Satz von Magneten einen ersten Stützmagneten (M1) umfasst, der geeignet ist, auf der Oberfläche (S) befestigt zu werden, sowie mindestens ein Magnetpaar bestehend aus einem zweiten Magneten (M2) und einem dritten Magneten (M3), wobei in Gebrauch:
- ein Küchengegenstand zwischen dem Magnetpaar, bestehend aus dem zweiten Magneten (M2) und dem dritten Magneten (M3), gehalten wird;
- das Magnetpaar, bestehend aus dem zweiten Magneten (M2) und dem dritten Magneten (M3), sowie der Küchengegenstand durch die magnetische Anziehungskraft des ersten Stützmagneten (M1) gehalten wird, die durch besagte Oberfläche (S) wirkt; und
- wenn das Paar von Magneten, bestehend aus dem zweiten Magneten (M2) und dem dritten Magneten (M3), sowie der Küchengegenstand von besagter Oberfläche (S) abgelöst wird, bleibt das Magnetpaar (M2, M3), bestehend aus dem zweiten Magneten (M2) und dem dritten Magneten (M3), miteinander verbunden,
**dadurch gekennzeichnet dass**
die Größe der magnetischen Anziehungsoberfläche (SM) des ersten Stützmagneten (M1) kalibriert ist, um einen oder mehrere Magneten oder ein oder mehrere Paare von Magneten (M2, M3) so zu halten, dass beim Ablösen des Küchengegenstands C), das zwischen dem Magnetpaar (M2, M3) gehalten wird, das Paar von Magneten (M2, M3) miteinander verbunden bleibt und sich vom Stützmagneten (M1) löst.

2. Die Verwendung eines Sets von Magneten zum Halten von Küchengegenständen gemäß Anspruch 1, wobei der mindestens eine zweite Magnet (M2) und weitere Magnete (Mn, Mn +1) mindestens einen oder mehrere Küchengegenstände (C) mit Hilfe von Haken, Klammern oder anderen für diesen Zweck passenden Mitteln an den Magneten (M2, M3 ... Mn, Mn + 1) halten.

3. Die Verwendung eines Sets von Magneten zum Halten von Küchengegenständen gemäß Anspruch 1, wobei an besagten mindestens ersten Stützmagneten (M1) direkt weitere Magneten (M2, M3, Mn, Mn + 1) durch magnetische Anziehung gebunden sind.

4. Die Verwendung eines Sets von Magneten zum Halten von Küchengegenständen gemäß Anspruch 1, wobei an besagten mindestens zweiten Magneten (M2) mindestens ein weiterer Magnet (M3) befestigt ist und an besagtem Magnet (M3) weitere Magneten (M4, M5 ... Mn, Mn + 1) angebracht sind, wodurch eine gestapelte Magnetverbindung entsteht, wobei jeder dieser Magneten sowohl durch den mindestens Stützmagneten (M1) als auch durch die magnetische Kette gehalten wird, die von den Magneten (M2 ... Mn) zwischen (Mn + 1) und (M1) gebildet wird.

5. Die Verwendung eines Sets von Magneten zum Halten von Küchengegenständen gemäß Anspruch 1, wobei der mindestens eine Stützmagnet (M1) durch Kleben auf der Oberfläche (S) befestigt ist.

6. Die Verwendung eines Sets von Magneten zum Halten von Küchengegenständen gemäß Anspruch 1, wobei jeder dieser Magneten eine Form hat, die zwischen rund, quadratisch und stilisiert in Form von beliebigen Gegenständen, Blumen oder Tieren gewählt werden kann.

7. Die Verwendung eines Sets von Magneten zum Halten von Küchenobjekten gemäß Anspruch 2, wobei besagter zweiter Magnet (M2) und besagte weiteren Magneten (Mn, Mn +1) alle durch magnetische Anziehungskraft an besagten ersten Stützmagneten (M1) gebunden sind.

## Revendications

1. Utilisation d'un kit d'aimants apte à supporter des objets de cuisine sur une surface (S), le kit d'aimants comprenant un premier aimant de support (M1) apte à être fixé sur la surface (S) et au moins une paire d'aimants comprenant un deuxième aimant (M2) et un troisième aimant (M3) où, lors de l'utilisation :
- un objet de cuisine est supporté entre la paire d'aimants comprenant le deuxième aimant (M2) et le troisième aimant (M3) ;
- la paire d'aimants comprenant le deuxième aimant (M2) et le troisième aimant (M3) et l'objet de cuisine est supporté par la force d'attraction magnétique du premier aimant de support (M1) agissant à travers ladite surface (S) ; et
- lorsque la paire d'aimants comprenant le deuxième aimant (M2) et le troisième aimant (M3) et l'objet de cuisine est détachée de ladite surface (S), la paire d'aimants (M2, M3) comprenant le deuxième aimant (M2) et le troisièmes aimant (M3) restent reliés entre eux,
**caractérisé en ce que**
la taille de la surface d'attraction magnétique (SM) du premier aimant de support (M1) est calibrée pour supporter un ou plusieurs aimants, ou une ou plusieurs paires d'aimants (M2, M3) de telle manière qu'en détachant l'objet de cuisine (C) supporté entre la paire d'aimants (M2, M3), la paire d'aimants (M2, M3) reste connectée l'un à l'autre et est déconnectée de l'aimant de support (M1).

2. L'utilisation d'un kit d'aimants apte à supporter des objets de cuisine selon la revendication 1, où ledit au moins deuxième aimant (M2) et d'autres aimants (Mn, Mn +1) maintiennent au moins un ou plusieurs objets de cuisine (C) au moyen de crochets, clips ou moyens adaptés à cet effet solidarisés audit aimant (M2, M3... Mn, Mn +1).

3. L'utilisation d'un kit d'aimants apte à supporter des objets de cuisine selon la revendication 1, où audit au moins premier aimant de support (M1) sont liés directement par attraction magnétique d'autres aimants (M2, M2, Mn, Mn +1).

4. L'utilisation d'un kit d'aimants apte à supporter des objets de cuisine selon la revendication 1, où audit au moins deuxième aimant (M2) est fixé au moins un autre aimant (M3) et audit aimant (M3) d'autres aimants (M4, M5 ... Mn, Mn +1) formant une connexion d'aimants empilés, chacun desdits aimants est maintenu en place à la fois par au moins ledit aimant de support (M1) que par la chaîne magnétique formée par les aimants (M2 ... Mn) reliés entre (Mn + 1) et (M1).

5. L'utilisation d'un kit aimants apte à supporter des objets de cuisine selon la revendication 1, où au moins un aimant de support (M1) est fixé à la surface (S) par collage.

6. L'utilisation d'un kit d'aimants apte à supporter des objets de cuisine selon la revendication 1, où chacun desdits aimants a une forme choisie parmi ronde, carrée, stylisée en forme d'objet quelconque, de fleur ou d'animal.

7. L'utilisation d'un kit d'aimants apte à supporter des objets de cuisine selon la revendication 2, où ledit deuxième aimant (M2) et lesdits autres aimants (Mn, Mn +1) sont tous liés par attraction magnétique audit premier aimant de support (M1).
